# EUROPÄISCHE PATENTSCHRIFT

(11) **EP 2 289 305 B1**
(45) Veröffentlichungstag und Bekanntmachung des Hinweises auf die Patenterteilung: **31.10.2012**
(21) Anmeldenummer: 10008831.9
(22) Anmeldetag: 25.08.2010
(51) Int. Cl.: A01F 15/00, A01F 15/08

(54) **Vorrichtung zur Reinigung einer Ballenpresse**
Device for cleaning a baling press
Dispositif de nettoyage d'une presse à balles

(30) Priorität: 28.08.2009 DE 102009039268
(43) Veröffentlichungstag der Anmeldung: 02.03.2011
(73) Patentinhaber: Müthing GmbH & Co. KG, 59955 Winterberg (DE); Agrarservice Georg Rubenbauer, 95695 Mähring (DE)
(72) Erfinder: Rubenbauer, Georg, 95695 Mähring (DE); Müthing, Michael, 59955 Winterberg (DE)
(74) Vertreter: Lempert, Jost

(56) Entgegenhaltungen:
- EP-A1- 0 240 086
- DE-A1- 4 429 066
- DE-A1- 19 528 658
- DE-U1- 9 211 541
- US-A- 3 020 829

## Beschreibung

Vorrichtung zum Pressen von Ballen, insbesondere Großballen, aus Erntegut, mit einer Aufnahmeeinrichtung zum Aufnehmen von Erntegut, mit einem Schneidwerk zum Zerkleinern des Erntegutes, mit einer Hauptpresseinrichtung zum Pressen des Erntegutes zu einem Ballen, mit einer Reinigungseinrichtung, wobei der Hauptpresseinrichtung eine Bindeeinrichtung zugeordnet ist, die Garn um einen fertig gepressten Ballen wickelt und verknotet und mit einem Saugdruckgebläse welches oberhalb der Bindeeinrichtung ausgebildet ist und dessen Unterdruckseite der Bindeeinrichtung zugewandt ist.

Derartige Vorrichtungen, als zur Gattung der Quaderballenpressen (im Gegensatz zu Rundballenpressen) gehörend, insbesondere als sogenannte Großballenpressen (eine große Quaderballenpresse), die von Zugmaschinen über ein Feld ziehbar sind, sind bekannt. Bei diesen Ballenpressen nimmt eine Aufnahmeeinrichtung Erntegut (z.B. Stroh oder Heu) auf, das über eine Zuführeinrichtung, welche zumeist ein Schneidwerk aufweist, einer Presseinrichtung zugeführt wird.

Hierbei weist die Presseinrichtung in der Regel eine Vorpresseinrichtung und eine Hauptpresskammer auf, welche die Ballen formt, die mehr als Rundballen wiegen. Bei Großballenpressen ist aufgrund der Dimension und Breite generell eine zentrale Führung der Pressen mittig hinter dem Traktor erforderlich. Daher ist bei diesen Pressen der Einzug (Pik-UP) mittig angeordnet und erfasst nahezu die gesamte Breite der Presse.

Das Erntegut wird mittels Schnecken nach der Pick-UP von den Seiten zentral zur Mitte zusammengeführt, da nachgeordnete Schneidwerke und Preßkanäle deutlich schmaler als die Gesamtbreite der Presse und damit schmaler alsder Aufnahe-Pick-UP sind. (Pressen-Breite ∼ 2,25m, Pick-Up-Breite 2,20m, Ballenmaß ∼ 1,20m breit).

Großballenpressen verfügen optional über ein Schneidwerk, das der Aufnahmeeinrichtung und der Schneckenzusammenführung direkt nachgeordnet ist. Weiter verfügen Großballenpressen über eine Vorpresseinrichtung, um die anfallende Masse des Erntegutes in kleineren Teilpaketen vorzuverdichten und diese Teilpakete dann in die Hauptpreßkammer zu übergeben statt eines unverdichteten Gutstromes. Dies wäre bei den Leistungsbereichen der Großballenpressen nicht dienlich. Über einen Presßkolben wird das Gut hoch verdichtet und dann der geformte Ballen mit Garn umwickelt und das Garn verknotet.

Das Erntegut wird in der Presskammer durch den Kolben hoch verdichtet, bis ein entsprechender Ballengegendruck im Presskanal durch die Auswurfeinrichtung aufgebaut ist. Dann wir die Garnzuführung sowie die Bindeeinrichtung mit dem Knoter ausgelöst und der Ballen gebunden sowie das Garn verknotet.

Anschließend wird der Ballen zur Auswurfeinrichtung (Schurre) weitergeführt - gedrückt und am Ende durch den Druck und die Zuführung weiterer Ballen ausgeworfen.

Die Zuführung der Teilpakete ist diskontinuierlich in Abhängigkeit der Stellung des Presskolbens. (Kolben zurückgezogen = Öffnung der Zuführung und Einbringen des Teilpaketes in die Hauptpresskammer, dann Vorschub des Kolbens zur Verdichtung etc.).

Wesentlich ist eine zusätzliche Vorpresskammer der Großballenpresse, eine zentrale Zuführung (unter Wegfall einer separaten seitlichen Raffereinrichtung) sowie ein optionaler Zubau einer Schneidvorrichtung.

Entscheidend ist bei diesem Prinzip die Formung eines Rechteckballens innerhalb einer festen Presskammer mit Hilfe eines Presskolbens sowie einer anschließenden Bindung des Ballens mit einer Bindeeinrichtung mit Knoter und Knoten im Garn.

Im Detail schiebt die Vorpresseinrichtung das Erntegut durch einen sich verjüngenden Kanal mittels eines sogenannten Raffers, der mit Zinken oder als Förderschnecke ausgebildet ist, wobei ab einer bestimmten Menge vorgepresster Erntegutmasse diese in die Hauptpresskammer überführt und portionsweise durch einen Presskolben, der mittels eines Schwungrades betrieben wird, nach und nach zu einem quaderförmigen Ballen verdichtet wird. Der Presseinrichtung ist eine Bindeeinrichtung zugeordnet, die Bindegarn oder Schnüre (in der Regel ca. 6) um den Ballen schlingt und dieses verknotet, zur Erhöhung der Festigkeit und zum späteren besseren Transport. Die Ballen können Abmessungen bis zu ca. B x H x L von 1,20m x 1m x 3m haben. Hiernach wird der Ballen mittels einer Ablageeinrichtung von der Presse auf dem Feld abgelegt. Bei diesem Vorgang hat sich gezeigt, dass die Zuverlässigkeit der Arbeitsweise der Ballenpresse, vor allem bezüglich der Bindeeinrichtung, insbesondere beim abschließenden Verknoten des Bindegarns, aufgrund von Verunreinigungen, wie Staub oder Kleinstteilen des Erntegutes (Spreu, Kurzstroh) sehr stark beeinträchtigt ist, so dass eine saubere Arbeitsweise der Pressenbestandteile und der anschließende Zusammenhalt des Ballens nach Ablage auf dem Feld nicht mehr gewährleistet ist. Die Bindeeinrichtung und weitere Bestandteile der Ballenpresse müssen teilweise mühsam von Hand gereinigt werden.

Die DE 4429066 A1 beschreibt eine Reinigungsvorrichtung für eine Bindeeinrichtung einer Ballenpresse. Die Ballenpresse weist oberhalb der Bindeeinrichtung ein Gebläse auf, welches Staub und Kleinstteile von der Bindeeinrichtung absaugt oder fortbläst. Nachteilig hierbei ist jedoch, dass andere Bereiche der Ballenpressen hierdurch nicht gereinigt werden und der von der Bindeeinrichtung entfernte Staub sich auf weitere wichtige Pressenbestandteile absetzen kann. Auch besteht Entzündungsgefahr, wenn sich der Staub oder die Kleinstteile des Erntegutes auf den Bremsbelägen oder deren beweglichen Teilen der Ballenpresse ablagern.

Der Erfindung liegt daher die Aufgabe zugrunde, eine Reinigung für eine Ballenpresse zum Herstellen von Erntegutballen dahingehend zu verbessern, dass die Zuverlässigkeit der Arbeitsweise der wichtigsten Pressenbestandteile, insbesondere der Bindeeinrichtung, erhöht und Verunreinigungen und/oder Verstopfungen vermindert oder ganz vermieden werden sowie Staub und Kleinstteile des Ernteguts auf den Boden zurückgefördert werden.

Diese Aufgabe wird erfindungsgemäß durch die Merkmale des Kennzeichens des Anspruchs 1 gelöst.

In einer besonders bevorzugten Ausgestaltung ist vorgesehen, dass seitlich des Saugdruckgebläses sowie nach vorne und/oder hinten Strömungskanäle bzw. Düsen an beiden Seiten der Vorrichtung mittels beweglicher Leitbleche ausgebildet sind und, dass das Saugdruckgebläse eine Ringleitung aufweist, wobei in der Ringleitung in geeigneten, insbesondere regelmäßigen Abständen bewegbar gelagerte Düsen ausgebildet sind, die angesaugte Luft zusammen mit den darin enthaltenen Staub- und Verunreinigungsteilen gezielt zur Reinigung von Pressenbestandteilen im Innenbereich der Vorrichtung nutzen und die Staub- und Verunreinigungsteilchen zum Boden hin fördern. Hierdurch ist eine Reinigungsströmung zu einzelnen Bestandteilen innerhalb der Vorrichtung führbar. Weiter kann vorgesehen sein, dass die Abschottungselemente formschlüssig miteinander verbunden sind, durch Einrastungen, ausgeformten Haken, Nieten und/oder Schrauben und, dass das Abschottungselement eines vorgebauten Häckslers und das Abschottungselement der Aufnahmeeinrichtung als Gliederblech aus einzeln einstellbaren Gliedern ausgebildet sind. Hierbei ist vorgesehen, dass die Abschottungselemente als in Form gezogene Bleche oder aus Kombination gezogener Bleche mit beweglichem Material, vorzugsweise Gummileisten oder -steckern ausgebildet sind.

Auch ist in bevorzugter Ausgestaltung eine Segmentdichtung für das Schneidwerk vorgesehen, wobei die Segmentdichtung eine vordere Segmentdichtung und/oder eine hintere Segmentdichtung aufweist. Hierbei ist vorgesehen, dass die vordere Segmentdichtung am Verbund zwischen Verbindungselement und Abschottungselement des Schneidwerks und die hintere Segmentdichtung am Ende des Abschottungselement des Schneidwerks hinter dem Schneidwerk angeordnet ist, wobei die Segmentdichtungen aus jeweils einem Streifen beweglichen Materials, vorzugsweise Gummi, gebildet sind, in welchen Lamellen eingeschnitten sind, so dass der Rotor des Schneidwerkes ungehindert drehbar ist.

In einer weiteren bevorzugten Ausführungsform ist vorgesehen, dass ein die Hauptpresseinrichtung antreibendes Schwungrad durch mindestens ein Abschottungselement vom Inneren der Vorrichtung isoliert ist. Hierdurch wird der Antrieb des Schwungrades und das Schwungrad selbst in wesentlich geringerem Maße verunreinigt.

In einer weiteren bevorzugten Ausgestaltung ist vorgesehen, dass der Aufnahmeeinrichtung ein Häcksler vorgeordnet ist, wobei der Häcksler gegen das Innere der Vorrichtung mit einem Abschottungselement abgeschottet ist, welches mit dem Abschottungselement der Aufnahmeeinrichtung formschlüssig verbunden ist. Dann kann weiterhin zwischen Häcksler und Aufnahmeeinrichtung in der Wandung der Vorrichtung eine seitliche Öffnung ausgebildet sein, um einen kontinuierlichen Luftstrom zu gewährleisten, der Verunreinigungen nach außen trägt. Hierzu ist auch in einer weiteren bevorzugten Ausführungsform in der Wandung der Vorrichtung zwischen Schneidwerk und Vorpresskammer eine seitliche Öffnung ausgebildet. In einer insgesamt bevorzugten Ausführungsform ist insbesondere der Bereich oberhalb des Raffers und des Hauptgetriebes geöffnet, damit durch den Luftstrom auch in diesem Bereich Staubanteile austreten können und Materialanteile auf den Raffer zurückfallen können, um von dort der Vorpresskammer wieder zugeführt zu werden.

Die Abschottungen und Austrittsöffnungen sind erforderlich, damit die Luftströmung, die über das Innere der Vorrichtung zu den Gebläsen kommt, von diese sicher angesaugt werden kann und ein kontinuierlicher Luftstrom gewährleistet ist, der die Verunreinigung nach außen trägt. Hiermit wird gewährleistet, dass eine Sauberhaltung aller wesentlichen Elemente der Vorrichtung erreicht wird.

In bevorzugter Ausgestaltung der Erfindung ist die Vorrichtung als gezogene Ballenpresse ausgebildet, wobei der Antrieb der Reinigungseinrichtung ausgehend von einem Zugfahrzeug über kraftübertragende, hydraulische und/oder elektrische Elemente erfolgt. Damit ist erfindungsgemäß vorgesehen Ballenpressen mit der Reinigungseinrichtung auszurüsten, wobei diese Ausrüstung zum Einen direkt bei der Herstellung der Ballenpresse erfolgen kann, und zum Anderen auch die Möglichkeit gegeben ist, schon vorhandenen Ballenpressen mit einer erfindungsgemäßen Reinigungseinrichtung nachzurüsten. Ausgehend von der Ballenpresse zur Verfügung stehende Antriebe für bestimmte Bestandteile der Ballenpresse, wie z.B. der Aufnahme- oder Presseinrichtung, ist vorgesehen einen weiteren Antrieb für die Reinigungseinrichtung oder bestehende Antriebe zu nutzen. Eine solche Nachrüstung hat den Vorteil, dass auch schon vorhandene Ballenpressen, bei denen die geschilderte Problematik auftaucht, mit einer Reinigungseinrichtung nachgerüstet werden können, so dass deren Effektivität und Durchsatzleistung gesteigert werden.

Durch die Kombination eines Saugdruckgebläses mit Strömungskanälen mit verstellbaren Abluftdüsen sowie der speziellen Anordnung von Abschottungselementen, einer Segmentdichtung für das Schneidwerk und Öffnungen in der Ballenpresse für einen kontinuierlichen Luftstrom, wird die Zuverlässigkeit der Arbeitsweise zum Einen der Bindeeinrichtung und zum Anderen der weiteren Pressenbestandteile erhöht. Verunreinigungen speziell im Bereich der Bindeeinrichtung werden hierdurch vermieden, so dass die Herstellung eines Ballens weitestgehend ohne Störungen erfolgen kann, wobei es ein wesentlicher Vorteil hierbei ist, dass der Vorgang des Pressens und Verknotens weitestgehend ohne Verunreinigungen abläuft, so dass die hergestellten Ballen und Knotenverbindungen eine ausreichende Stabilität erhalten und sich auch nach Ablage des Ballens auf dem Feld und bei dem weiteren Transport nicht lösen.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigt:
- Fig. 1: einen Längsschnitt durch eine erfindungsgemäße Ballenpresse mit einem vorgeordneten Häcksler gemäß Schnitt A-A in Fig. 4;
- Fig. 2a: eine Detailansicht des Bereichs E der Fig. 1 einer von Abschottungselementen umgeben- en Aufnahmeeinrichtung;
- Fig. 2b: eine Detailansicht des Bereichs F der Fig. 2a einer Segmentdichtung an einem Schneid- werk;
- Fig. 3: eine Querschnittsansicht gemäß Schnitt B-B in Fig. 1 in Blickrichtung eines Schwungrades;
- Fig. 4: eine Ansicht von oben auf die Ballenpresse mit abgenommener Abdeckung eines Sauggebläses;
- Fig. 4a: einen vergrößerten Ausschnitt der Fig. 4;
- Fig. 5: einen schematischen Längsschnitt gemäß Schnitt C-C in Fig. 4;
- Fig. 6: eine Detailansicht des Bereichs G der Fig. 5;
- Fig. 7: eine Querschnittsansicht gemäß Schnitt D-D in Fig. 1 auf eine Bindeeinrichtung der Ballen- presse;

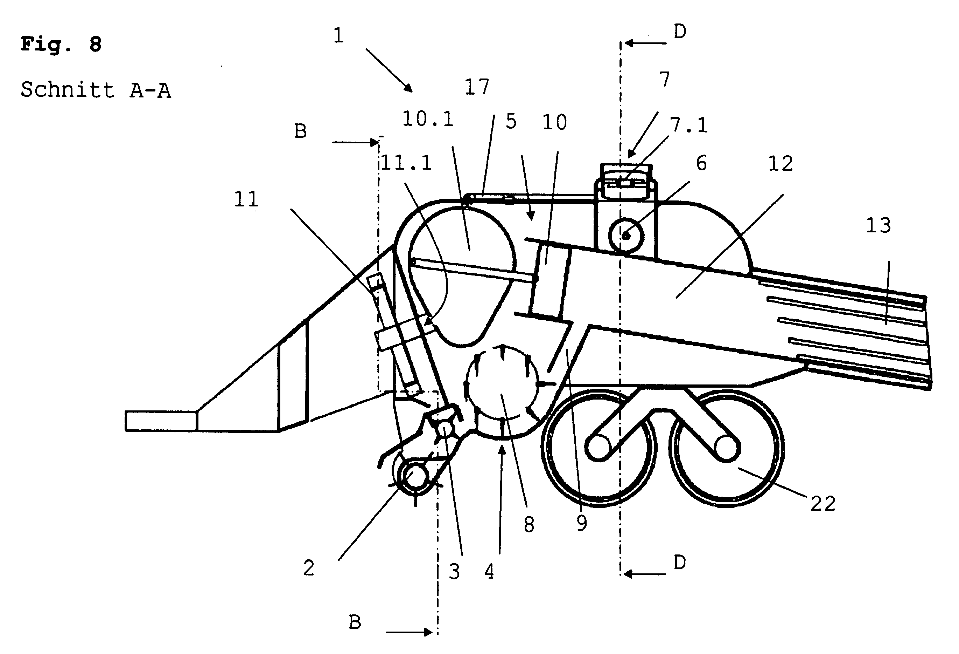

- Fig. 8: einen Längsschnitt durch eine weitere Ausfüh- rungsform einer Ballenpresse gemäß Schnitt A-A in Fig. 4; und
- Fig. 9: die Darstellung der Fig. 1 mit gestrichelten Pfeilen die Luftströmungen bei einer erfin- dungsgemäßen Großballenpresse.

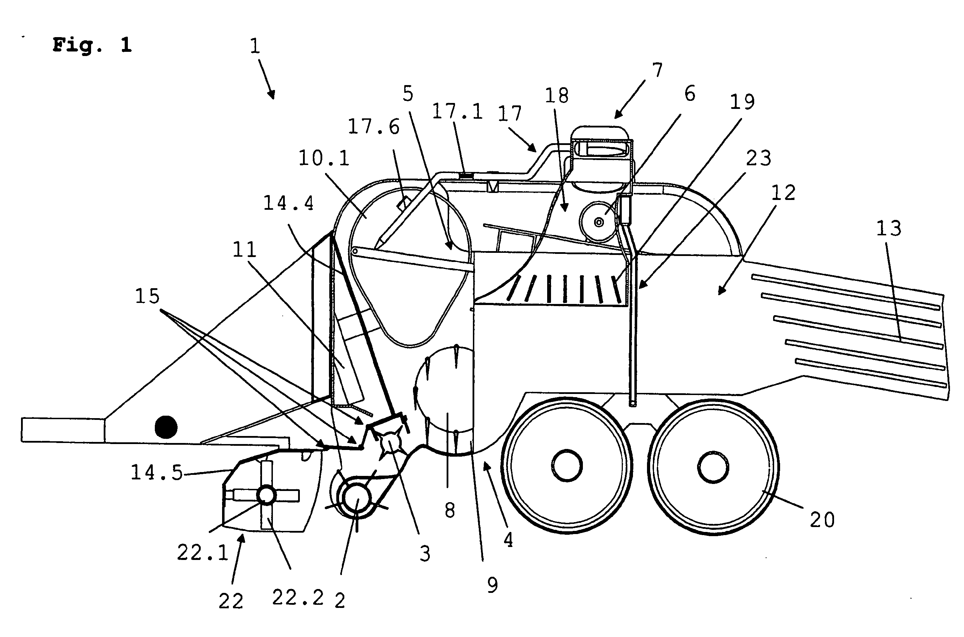

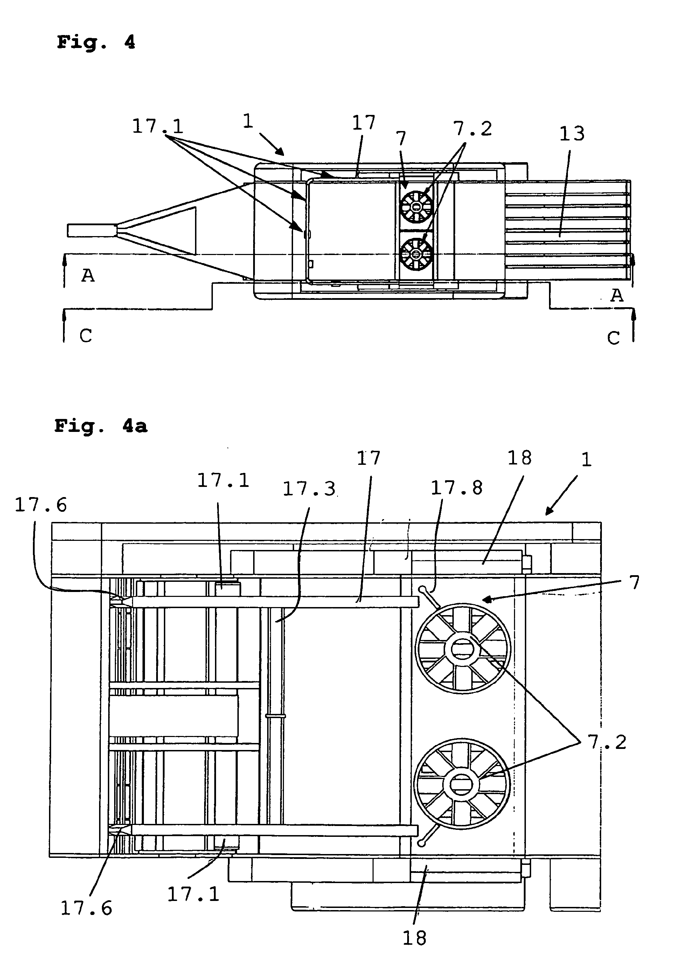

Die Fig. 1 zeigt einen Längsschnitt durch eine erfindungsgemäße Ballenpresse 1 gemäß A-A in Fig. 4. Die dargestellte Großballenpresse 1 weist eine Aufnahmeeinrichtung 2 zur Aufnahme von auf einem Feld liegenden Erntegut, ein Schneidwerk 3, um das Erntegut zu zerkleinern, und eine Vorpresseinrichtung 4 auf. Der Vorpresseinrichtung 4 ist eine Hauptpresseinrichtung 5 mit einer Bindeeinrichtung 6 nachgeordnet. Oberhalb der Hauptpresseinrichtung 5 ist ein Reinigungsgebläse in Form eines Saugdruckgebläses 7 angeordnet. Die Vorpresseinrichtung 4 weist einen Raffer 8 auf, welcher das Erntegut einem Vorpresskanal 9 zuführt. Der Hauptpresseinrichtung 5 zugeordnet ist ein Presskolben 10, der mittels eines Schwungrades 11 und eines Hauptantriebs 10.1 antreibbar ist.

Das Saugdruckgebläse 7 ist oberhalb der Bindeeinrichtung 6 in die Abdeckung der Bindeeinrichtung 6 der Ballenpresse 1 integriert und weist eine Abdeckung 7.1 auf, die durch Schwenken oder Aufklappen abnehmbar ausgebildet ist. Die Abdeckung 7.1 dient zur Gewährleistung eines kontinuierlichen Luftstromes durch das Saugdruckgebläse 7, und zur Sicherheit für den Benutzer der Ballenpresse.

Vom Saugdruckgebläse führt eine Druckluftleitung 17 zum Antriebsbereich der Ballenpresse 1 mit Hauptantrieb 10.1, Schwungrad 11 und Presskolben 10 um in diesem Bereich einen Überdruck aufzubauen und so das Eindringen von Partikeln zu vermeiden, oder zumindest zu reduzieren und gegebenenfalls noch eindringende Partikel zu entfernen.

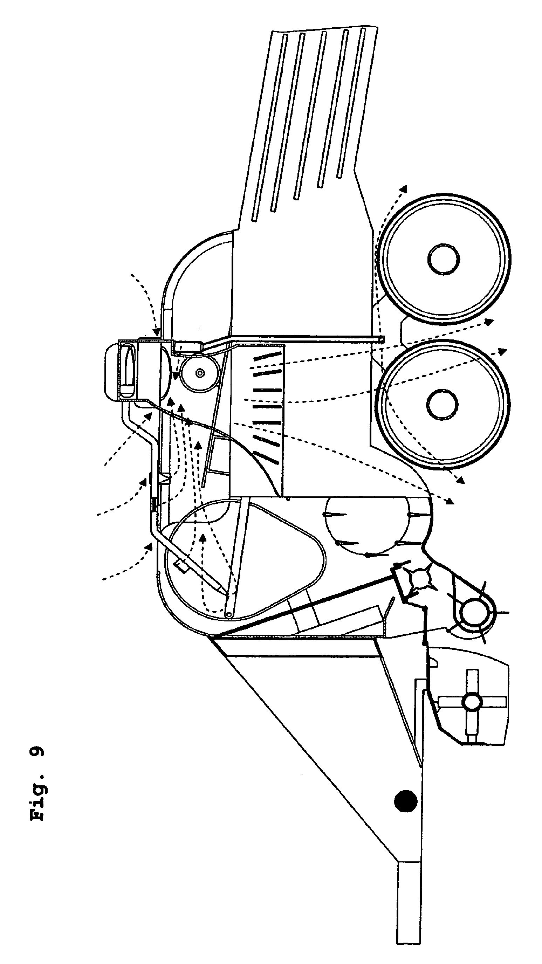

Fig. 9 zeigt eine weitere Ausgestaltung einer Ballenpresse 1. Der Aufnahmerichtung 2 ist hier zusätzlich ein Häcksler 22 vorgeordnet. Der Häcksler 22 weist einen rotierbaren Zylinder 22.1 mit Zinken 22.2 und eine Anordnung aus stationären Messern (nicht dargestellt) auf. Der Häcksler 22 ist von einem der Form des Häckslers 22 nachgebogenen Abschottungselement 14.5 überdeckt, wobei das Abschottungselement 14.5 mittels Nieten, Schrauben, Haken oder kurzen beweglichen Gummi- bzw. Kunststoffleisten mit den Abschottungselementen 14.1-14.3 der Aufnahmeeinrichtung 2 verbunden ist. Das Abschottungselement 14.5 des Häckslers 22 kann auch als Gliederblech aus einzeln bewegbaren Gliedern zur Optimierung des Erntegutflusses durch den Häcksler 22 ausgebildet sein.

Die Ballenpresse 1 weist weiterhin eine Kombination von Abschottungselementen zur Isolierung bestimmter Pressenbestandteile auf.

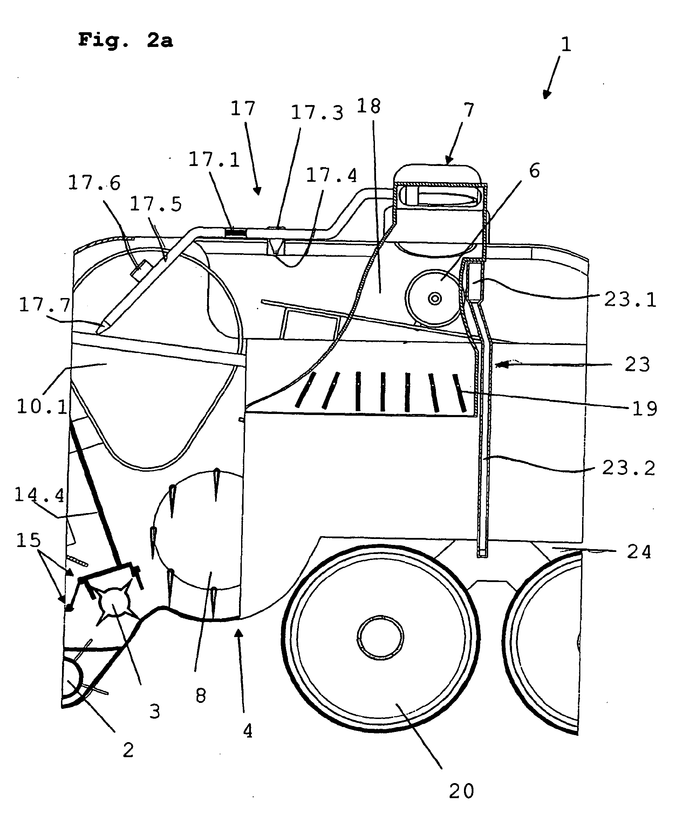

In Fig. 2a ist eine Detailansicht E des vorderen Pressenteils im Längsschnitt dargestellt, wobei hier die Aufnahmeeinrichtung 2 und das Schneidwerk 3 vergrößert dargestellt sind. Die Aufnahmeeinrichtung 2 weist einen Zylinder mit konzentrisch angeordneten Zinken 2.1 auf, das Schneidwerk 3 ist als zylinderförmiger Schneidwerksrotor 3.1 mit Führungszinken 3.1 dargestellt, die Erntegut auf eine stationäre Messerreihe (nicht dargestellt) fördern.

Sowohl die Aufnahmeeinrichtung 2 als auch das Schneidwerk 3 sind durch Abschottungselemente 14.1-14.4 nach oben bzw. in Richtung des Schwungrades 11 abgeschottet. Die Abschottungselemente 14.1-14.4 sind hierbei über die gesamte Breite der Ballenpresse 1 ausgebildet und über einen Verbund 15 miteinander formschlüssig verbunden. Der Verbund 15 ist als Einrastungen und/oder Haken ausgebildet, wobei auch eine Vernietung, Verschraubung, Verschweißung oder Verklebung der Abschottungselemente 14.1-14.4 möglich ist.

Ein Abschottungselement 14.1 über der Aufnahmeeinrichtung 2 ist nach vorne zur Fahrtrichtung der Ballenpresse 1 hin abgeknickt ausgebildet, um aufsteigendes Erntegut aufzufangen, das mittels der Zinken 2.1 vom Feld aufnehmbar ist. Das Abschottungselement 14.1 kann auch aus einzelnen bewegbar verbundenen Gliedern ausgebildet sein, wobei die Glieder dem Erntegutfluss anpassbar gelagert sind.

Mit dem Abschottungselement 14.1 über den Verbund 15 formschlüssig verbunden ist ein Verbindungselement 14.2, das weiterhin formschlüssig mit einem Abschottungselement 14.3 für das Schneidwerk 3 verbunden ist, um das Schwungrad 11 nach unten hin abzuschotten. Es kann somit kein Material von unten in den Bereich des Schwungrades 11 aufsteigen und selbiges verschmutzen.

Das Schwungrad 11 ist weiterhin durch ein über die gesamte Breite der Ballenpresse 1 vertikal nach oben ausgeformtes Abschottungselement 14.4 vom Inneren der Ballenpresse 1 isoliert. Das Abschottungselement 14.4 weist eine Öffnung 11.1 für eine kraftübertragende Stange 11.2 zur Kolbenführung des Presskolbens 10 auf.

Eine Druckleitung 17 ist oberhalb des Pressbereichs 5 seitlich bis zum vorderen Abschnitt desselben geführt und weist seitliche Abluftdüsen 17.1 auf, durch die ein Teil der vom Knoter her staubbelasteter Luft ins Freie geblasen wird. Weiter ist eine Querleitung 17.3 der Druckleitung 17 vorgesehen, die mittig eine Sperre zur Trennung der Ströme hat und nach unten gerichtete Auslassdüsen 17.4 aufweist. Seitlich und an den Enden verlängerter nach unten abgewinkelter Abschnitte 17.5 der Druckleitung 17 sind ebenfalls Auslassdüsen 17.6 vorgesehen, durch die Druckluft in den Antriebsbereich zum Staubfreihalten der derartigen Aggregate verteilt wird. Auch die freien Enden der Druckleitungen 17 sind als Düsen 17.7 ausgebildet, um gegen das hinter dem Schwungrad angeordnete Abschottungsblech Luft auszublasen und zu verteilen.

Die Luft wird über die Düsen zum einen als Druckluft zur Reinigung des Hauptgetriebes und der Presskolbeneinheit sowie von Verkleidungen im Inneren der Presse genutzt als auch zur Aufrechterhaltung der Luftbewegung der verschmutzten Luft im Inneren der Presse.

Die Druckluft wird so über die Luftleitungen 17 entsprechend im inneren Pressenbereich verteilt und über das Sauggebläse zurückgeführt, so dass sich auf diese Weise (mit Frischluft als Zuluftzufuhr angereichert) eine Zirkulations(-Ring)-Luftbewegung und Führung ergibt.

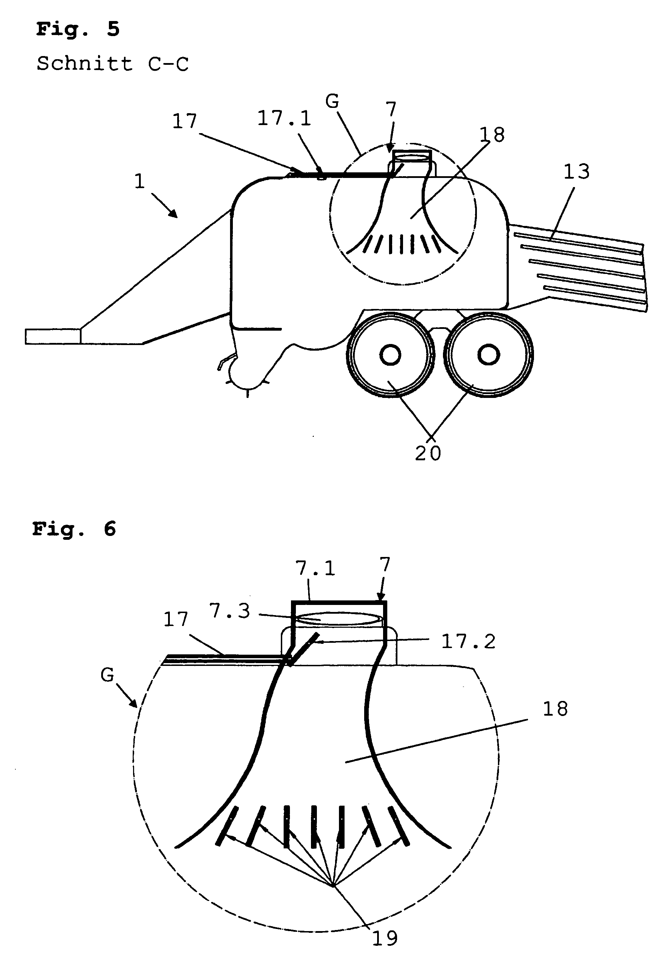

Fig. 2a zeigt weiterhin einen auf jeder Seite der Ballenpresse von der Druckluftseite des Gebläses 7 seitlich nach unten geführten Luftkanal 18, der sich fächerartig erweitert und mit fächerartigen Leitblechen 19 versehen ist (hierzu im Einzelnen Beschreibung zu Fig. 5 bis 7).

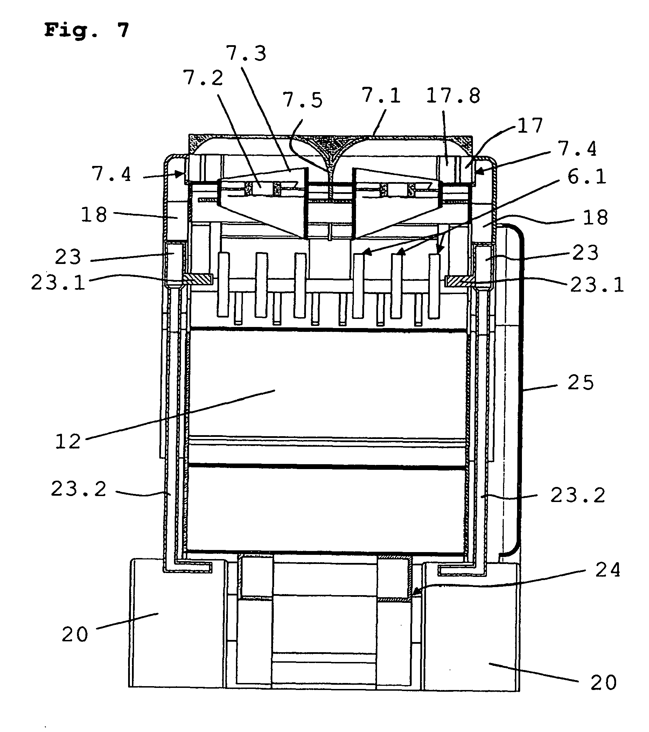

Weiter führt von der Druckseite des Gebläses 7 eine Leitung 23 einerseits über Abzweige 23.1 zur Bindeeinrichtung 6, andererseits über eine Druckluftleitung 23.2 mittig unter die Ballenpresse zum Fahrwerk 24, um dieses durch Luftströmung zu reinigen (s. auch Fig. 7).

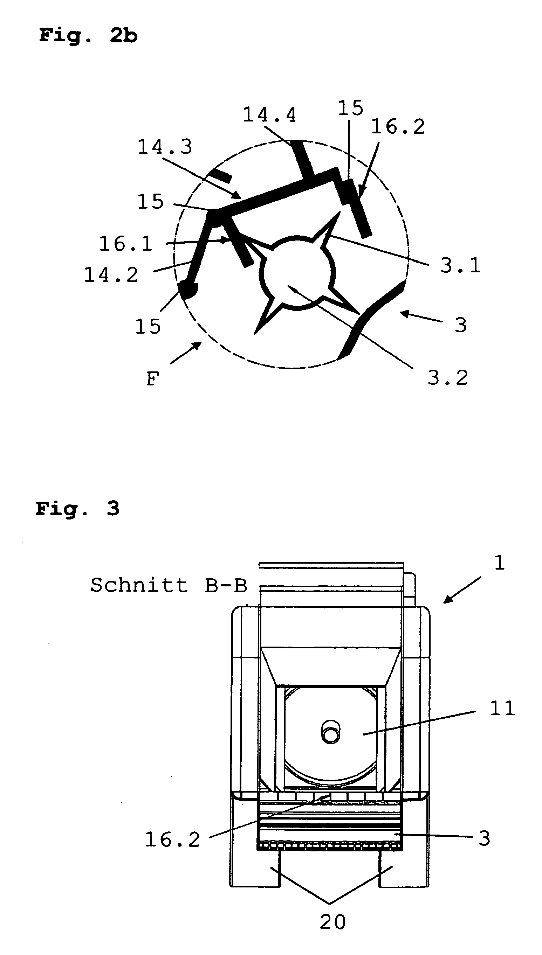

Wie deutlich in Fig. 2b dargestellt ist, ist an der Verbindung zwischen Abschottungselement 14.3 des Schneidwerks 3 und Abschottungselement 14.4 des Schwungrades 11 eine das Schneidwerk 3 zum Inneren der Ballenpresse 1 abschirmende Segmentdichtung 16 angeordnet.

Die Segmentdichtung 16 weist eine vordere Segmentdichtung 16.1 und/oder eine hintere Segmentdichtung 16.2 auf. Die vordere Segmentdichtung 16.1 ist formschlüssig am Verbund 15 zwischen dem Verbindungselement 14.2 und dem Abschottungselement 14.3 des Schneidwerks 3 befestigt. Die hintere Segmentdichtung 16.2 ist formschlüssig am Abschottungselement 14.4 des Schwungrades 11 befestigt. Die Segmentdichtungen 16.1, 16.2 bestehen hierbei aus flexiblem Material, vorzugsweise Gummi. Die Segmentdichtungen 16.1, 16.2 weisen die Breite des Schneidwerkes 3 auf und sind in gleichmäßigen Abständen kammartig eingeschnitten. Die Höhe der Segmentdichtungen 16.1, 16.2 ist so bemessen, dass eine maximale Abschottung zum Inneren der Ballenpresse 1 gewährleistet ist, ohne die Führungszinken 3.2 in ihrer Bewegung zu behindern. Auf diese Weise können die Führungszinken 3.2 des Schneidwerks 3 die Segmentdichtungen 16.1, 16.2 ungehindert passieren, indem einzelne Segmente durch die Zinken 3.1 bewegt bzw. weggeklappt werden, so dass die Schneidwirkung des Schneidwerkes 3 nicht beeinträchtigt wird.

Fig. 3 zeigt eine Vorderansicht der Segmentdichtung 16.2 in einem Querschnitt durch die Ballenpresse 1 gemäß Schnitt B-B der Fig. 4. Gleiche Teile sind mit gleichen Bezugszeichen versehen. Im Vordergrund ist das Schwungrad 11 gezeichnet, darunter befindet sich die Segmentdichtung 16.2, die über die gesamte Breite des Schneidwerkes 3 in Lamellenform ausgebildet ist.

Aus der Fig. 4a ist darüber hinaus ersichtlich, dass vor den Einlässen der Druckleitung 17 verstellbare Luftzuleitungsklappen 17.8 angeordnet sind, um die Luftzufuhr über die Druckleitung 17 zu regeln.

In einer weiteren Ausführungsform kann vorgesehen sein, dass die hintere Segmentdichtung 16.2 durch eine verlängerte Ausgestaltung des Abschottungselementes 14.3 in das Innere der Vorrichtung 1 entfernt vom Schneidwerk 3 angebracht ist. In dieser Anordnung ist die Segmentdichtung 16.2 bis zur Höhe des Mittelpunkts des Schneidwerkrotors 3.1 verlängert ausgebildet. Die Segmentdichtung 16.2 weist damit keinen direkten Kontakt mit den Zinken 3.1 des Schneidwerks 3 auf, wodurch der Verschleiß der Segmentdichtung 16.2 durch Abrieb wesentlich verringert ist.

Durch diese beschriebenen Abschottungsmaßnahmen wird zunächst der Staub- und Fremdteilcheneintritt stark reduziert und damit minimiert. Weiter wird - wie im Folgenden beschrieben - durch Ansaugen von Luft aus dem Bereich der Knoter 6.1 dieser kontinuierlich sauber gehalten sowie die angesaugte Abluft druckluftseitig zur Reinigung von mehreren Teilen der Ballenpresse und zu einer stetigen Aufrechterhaltung einer stetigen Luftbewegung genutzt, um Ablagerungen und Verschmutzungen zu unterbinden.

Die Fig. 4 zeigt eine Ansicht der Ballenpresse 1 von oben mit abgenommener Abdeckung 7.1 des Saugdruckgebläses 7. Das Saugdruckgebläse 7 weist mindestens zwei Ventilatoren 7.2 auf, die als Trommel- oder Querstromgebläse vorliegen können. Die Saugseite ist nach unten unmittelbar zur Bindeeinrichtung 6 hin gerichtet.

Ein druckseitiger Kanal oberhalb des Drucksauggebläses führt zu beidseitig der Ballenpresse 1 vorgesehenen seitlichen Luftkanälen 18, vor denen weiterhin im oberen Bereich - und damit ebenfalls druckseitig - eine Leitung 17 abzweigt (siehe auch Fig. 4 bis 6). Die Leitung 17 führt auf dem Dach der Ballenpresse 1 über die Hauptpresseinrichtung 5. Die Leitung 17 weist eine - dem Saugdruckgebläse abgewandte - geschlossene Mitte und verstellbare Abluftdüsen 17.1 auf. Hiermit ist ein Luftstrom zur Reinigung in den vorderen Bereich der Hauptpresseinrichtung 5 lenkbar, mit dem dieser und insbesondere die dortigen Funktionselemente, wie insbesondere Hauptantrieb 10.1, der Presskolben 10, Schwungrad 11 etc. reinigbar sind.

Die Luft wird damit im Wesentlichen von der Seite her von vorn und hinten über die gesamte Knotertischhälfte (die Abringung der Knoterreihe oberhalb der Presskammer wird Knotertisch genannt) geführt und reinigt so jeweils den halbseitigen Bereich ohne Verwirbelungen und Turbulenzen, wie sie bei offenen Gebläsezuführungen die Folge wären.

Zur Regelung des Luftstroms ist der Leitung 17 ein beweglich gelagertes Leitblech 17.2 zugeordnet (siehe Fig. 6). Die Leitung 17 kann auch derart auf dem Dach der Ballenpresse 1 ausgebildet sein, so dass die vom Saugdruckgebläse 7 angesaugte Luft in die hinteren Bereiche der Hauptpresseinrichtung 5 lenkbar ist (nicht dargestellt).

Weiterhin sind - wie schon gesagt - beidseitig an der Wandung der Ballenpresse 1 jeweils ein Luftkanal 18 angeordnet (Fig. 5 als Schnitt C-C der Fig. 4), welcher druckseitig von der Abdeckung des Saugdruckgebläses 7 von oben nach unten sich bogenförmig erweiternd ausgebildet ist. Im unteren, sich erweiternden Teil des Luftkanals 18 sind beweglich gelagerte Leitbleche 19 in regelmäßigen Abständen zueinander angeordnet, womit über der Bindeeinrichtung 6 angesaugte Luft in verschiedene Richtungen ablenkbar und zur Reinigung weiterer Pressenbestandteile nutzbar ist. Fig. 6 zeigt dies in einer Detailansicht G.

Ein Querschnitt durch diesen Bereich gemäß Schnitt D-D der Fig. 1 ist in der Fig. 7 dargestellt. Über der Hauptpresseinrichtung 5 ist die Bindeeinrichtung 6 mit ihren Knotern 6.1 angeordnet. Über den Knotern 6.1 ist das Saugdruckgebläse 7 angeordnet. Die Ventilatoren oder Gebläse 7.2 weisen je um ihren Umfang ein ausgeformtes zylindrisches Leitblech 7.3 auf, dessen oberes und/oder unteres Ende schräg ausgeformt ist, wobei das Leitblech 7.3 zur Pressenmitte höher ausgebildet ist, als zum äußeren Rand und daher insbesondere jeweils zur Mitte hin eine teilzylinderische Abschirmung bilden.

Über den Ventilatoren 7.2 ist eine Abdeckung 7.1 angeordnet, die zur Luftumlenkung der angesaugten Luft und zur Sicherheit des Pressenbedieners dient. Die Abdeckung 7.1 weist eine zwischen den Ventilatoren nach unten ragende Trennwand 7.5 auf. Durch diese Maßnahmen wird insbesondere druckluftseitig eine gezielte Führung der Luftströmung bewirkt. Hierdurch wird eine Teilung der Druckluftströmen sichergestellt und eine Überlagerung derselben sowie Turbulenzen verhindert. Weiterhin ist die Abdeckung 7.1 mit Einformungen und sich verjüngenden Auslassöffnungen zur Seite zu den seitlichen fächerförmigen Abluftkanälen sowie nach vorne zu den Ring-Druckluftkanälen versehen. Damit dient die Abdeckhaube neben der Schutzfunktion oberhalb der Gebläse gleichzeitig als Windleitkanal und zur weiteren Druckerhöhung.

Durch eine seitlich verengte Austrittsöffnung der Abdeckung 7.1 tritt die Luft in die beiden seitlichen Fächer-Luftleitkanäle, kurz Luftkanäle 18 (hierzu auch Fig. 2a, 6), ein und wird von diesen Zur Reinigung der seitlichen Pressbestandteile, wie der Zwischenräume zwischen Presskammer und seitlicher Abdeckung, seitlichen angebrachten Garnkästen, Achsen und Bremsbereichen genutzt, wobei die Abluft durch die verstellbaren Leitbleche 19 am Ausgang der Fächer-Luftleitkanäle 18 gezielt gesteuert werden kann. Wie der Fig. 7 zu entnehmen ist, befindet sich im oberen Bereich der Fächer-Abluftkanäle 18 eine Luftaustrittsöffnung mit einer Luftzuführung zu den Knotern 6.1 als Rückführung sowie der weiteren Luftleitung 23 (s. Fig. 4a) nach unten, die dann unterhalb der Bindeeinrichtung 6 in der Mitte zu reinigen. Die Querschnitte dieser beiden Luftkanäle und der Luftaustrittsöffnung sind so gestaltet, dass sich die erforderliche Luftverteilung als feste Größe ergibt, so dass hier keine zusätzlichen Einstellklappen o.ä. erforderlich sind. Mit 25 ist eine seitliche Gebäudeabdeckung der Ballenpresse 1 bezeichnet.

Durch diese Abluftleitungen wird die verunreinigte Luft jeweils zu 60% nach unten außen auf den Boden geführt. (ca. 10% gelangt über die Rückführung aus diesem Abluftbereich über die Knoter in den Kreislauf zurück.

Weiterhin weist die Abdeckung zu beiden Seiten Austrittsöffnungen 7.4 auf, die in beiden Seiten der Ballenpresse 1 ausgebildeten Luftkanäle 18 führen, wie sie auch in Fig. 7 näher beschrieben sind. Der Luftkanal 18 reicht bis etwa zur halben Höhe der Presskammer 12, und führt weiterhin in einen Randbereich der Ballenpresse 1. Der Boden der Ballenpresse 1 weist über den Rädern 20 Austrittsöffnungen 21 auf, durch welche die Luft mit (Rest-)Anteilen an Staub etc. über die Achse - und Fahrwerk - sowie auch Bremselemente zur Reinigung derselben geführt und letztendlich Festanteile, wie Staub und Kleinstteile, aus der Ballenpresse 1 auf den Boden bzw. das Feld zurückgeführt werden.

Die Kombination der Abschottungselemente 14.1 bis 14.5, der Segmentdichtung 16 und des Saugdruckgebläses 7 mit der Ringleitung 17 bewirken in ihrer Gesamtheit eine saubere Ballenpresse 1. Der Häcksler 22 bearbeitet das Erntegut vor, indem es aufgenommen und durch eine stehende Messeranordnung gefördert wird. Wird Erntegut von einem Feld vom Häcksler 22 und der Aufnahmeeinrichtung 2, die ein im Uhrzeigersinn rotierender Zylinder mit konzentrisch angeordneten Zinken 2.1 darstellt, aufgenommen, entsteht durch die schnelle Rotation des Häckslers 22 und der Erntegutaufnahme 2 ein Luftstrom in Richtung des Presseninneren, welcher das Erntegut sowie Staub- und Kleinstteile zum Schneidwerk 3 weiter transportiert.

Durch die erfindungsgemäßen Abschottungselemente 14.1 bis 14.5 entsteht ein Strömungskanal, in welchem das Erntegut in Richtung des Schneidwerks 3 transportiert wird. Durch die Ausbildung der Abschottungselemente 14.1, 14.5 des Häckslers 22 und/oder der Aufnahmeeinrichtung 2 ist eine Optimierung bzw. Anpassung an den Erntegutfluss möglich. Staub und aufgenommene Kleinstteile des Ernteguts verbleiben in diesem Strömungskanal und können nicht über entstehende Verwirbelungen in das Innere der Ballenpresse 1 oberhalb der Aufnahmeeinrichtung 2 bzw. des Schneidwerks 3 gelangen. Sie werden durch eine Öffnung (nicht dargestellt) in der Außenwand der Ballenpresse 1 zwischen Häcksler 22 und Aufnahmeeinrichtung 2 und/oder aus einer weiteren Öffnung (nicht dargestellt) in der Außenwandung der Ballenpresse 1 zwischen Schneidwerk 3 und Vorpresseinrichtung 4 teilweise seitlich herausgetragen.

Im Schneidwerk 3 wird das zu schneidende Erntegut mittels rotierender Zuführzinken 3.2 gegen stationäre Messer (nicht dargestellt) gedrückt. Sowohl das Schneidwerk 3, als auch das Innere der Ballenpresse 1 wird durch die Segmentdichtungen 16.1, 16.2 vor weiterem Eindringen von Verunreinigungen aus dem jeweils gegenüberliegenden Bereich geschützt, wobei die geschnittenen und/oder gehäckselten Erntegutteile in die Vorpresseinrichtung 4 weiter transportiert werden.

Bevor ein Raffer 8 die Strohteile in den Vorpresskanal 9 zur Hauptpresseinrichtung 5 vorpresst, ist eine weitere Öffnung 23 zwischen Raffer 8 und Vorpresskanal 9 vorgesehen, so dass eventuell aufsteigendes Material wieder in den Raffer 8 zurückfallen kann. Verbleibende Staubanteile im Förderkanal können zusätzlich durch die nach oben offene Ausgestaltung der Ballenpresse oberhalb des Raffers 8 und des Hauptgetriebes 10.1 nach oben austreten, während größere Erntegutanteile auf den Raffer 8 zurückfallen und von dort der Vorpresskammer 9 wieder zugeführt werden können. Eine komplette Isolierung dieses Strömungskanals würde zu einer starken Verunreinigung und schlussendlich zu einer Verstopfung an dieser Stelle führen.

Vollständig isoliert ist hingegen das Schwungrad 11, wodurch eine Verunreinigung des vorderen Antriebs durch Verwirbelungen vermieden wird. Das zerkleinerte Erntegut wird in der Vorpresskammer 4 mittels des Raffers 8 in einen sich gegen Ende verjüngenden Kanal 9 gefördert und dort weiter durch das nachrückende Erntegut bis zu einem bestimmten Vorpressdruck vorgepresst. Ist eine bestimmte Vorpressung erreicht, wird das Erntegut der Hauptpresseinrichtung 5 zugeführt und mittels eines Presskolbens 10, der über das Hauptgetriebe 10.1 und das Schwungrad 11 im vorderen Teil der Ballenpresse 1 angetrieben wird, in einer Presskammer 12 zu einem Ballen gepresst.

Die Ballen werden nach Beendigung des Pressvorganges von der Bindeeinrichtung 6 mit Bindegarn umschlungen und danach verknotet, wobei der fertig gepresste und mit Bindegarn fest verbundene (Groß-) Ballen über eine Ablageeinrichtung 13 auf dem Feld abgelegt wird. Staub und Kleinstteile des Erntegutes innerhalb der Hauptpresseinrichtung 5 werden, da sie sich bevorzugt an den Knotern 6.1 sammeln, von der Bindeeinrichtung 6 mittels der Ventilatoren 7.2 des Saugdruckgebläses 7 abgesaugt.

Die Abdeckung 7.1 lenkt den Luftstrom nach oben und zur Seite, nach vorne bzw. hinten durch die Öffnungen 7.4 hin ab. Ein Teil des Luftstromes wird mittels des beweglichen Leitbleches 17.2 in die Ringleitung 17 geleitet, wobei die Luft durch die Düsen 17.1 strömt und zur Reinigung der seitlichen und vorderen bzw. hinteren Pressenbestandteile, wie den Hauptantrieb 10.1 oder die Presskammer 12, genutzt werden kann. Die Abluft wird seitlich nach unten in Richtung der Unterseite der Ballenpresse 1 weggeführt und kann mittels der Leitbleche 19 zur weiteren Reinigung von weiteren Pressenbestandteilen verwendet werden.

Der Staub wird aus der Ballenpresse 1 mittels des Luftstroms durch die Öffnungen 21 über den Rädern 20 nach draußen in Richtung des Bodens gefördert. Durch den steten Luftstrom durch die Vorrichtung 1 werden eindringende Verunreinigungen und Ablagerungen in der Schwebe gehalten und sind somit einfacher durch das Saugdruckgebläse 7 absaugbar.

### Bezugszeichenliste

- 1: Ballenpresse
- 2: Aufnahmeeinrichtung
- 2.1: Zinken
- 3: Schneidwerk
- 3.1: Schneidwerkrotor
- 3.2: Führungszinken
- 4: Vorpresseinrichtung
- 5: Hauptpresseinrichtung
- 6: Bindeeinrichtung
- 6.1: Knoter
- 7: Gebläse
- 7.1: Abdeckung
- 7.2: Ventilatoren
- 7.3: Leitblech
- 7.4: Austrittsöffnung
- 7.5: Trennwand
- 8: Raffer
- 9: Vorpresskanal
- 10: Presskolben
- 10.1: Hauptantrieb
- 11: Schwungrad
- 11.1: Öffnung
- 11.2: Stange
- 12: Hauptpresskammer
- 13: Ablageeinrichtung
- 14.1-14.5: Abschottungselemente
- 15: Verbund
- 16.1: Segmentdichtung
- 16.2: Segmentdichtung
- 17: Druckleitung
- 17.1: Abluftdüsen
- 17.2: Leitblech
- 17.3: Querleitung (von 17)
- 17.4: Auslassdüsen (von 17.3)
- 17.5: abgewinkelter Abschnitt (von 17)
- 17.6: Auslassdüsen
- 17.7: Auslassdüsen
- 17.8: Luftzuleitungsklappen
- 18: Luftkanal
- 19: Leitbleche
- 20: Räder
- 21: Austrittsöffnung
- 21.1: Zylinder
- 22: Häcksler
- 22.2: Zinken
- 23: Leitung
- 23.1: Abzweige
- 23.2: Druckluftleitung
- 24: Fahrwerk
- 25: Gehäuse-Abdeckung

## Patentansprüche

1. Vorrichtung zum Pressen von Ballen, insbesondere Großballen, aus Erntegut, mit einer Aufnahmeeinrichtung (2) zum Aufnehmen von Erntegut, mit einem Schneidwerk (3) zum Zerkleinern des Erntegutes, mit einer Hauptpresseinrichtung (5) zum Pressen des Erntegutes zu einem Ballen und mit einer Reinigungseinrichtung, wobei der Hauptpresseinrichtung (5) eine Bindeeinrichtung (6) zugeordnet ist, die Garn um einen fertig gepressten Ballen wickelt und verknotet, mit einem Saugdruckgebläse (7), welches oberhalb der Bindeeinrichtung (6) ausgebildet ist und dessen Unterdruckseite der Bindeeinrichtung (6) zugewandt ist, **gekennzeichnet durch** die folgenden Elemente:
- Abschottungselemente (14.1 - 14.3; 16), welche die Aufnahmeeinrichtung (2) und das Schneidwerk (3) vom Inneren der Vorrichtung (1) isolieren; und
- über Leitungen (17) mit dem Saugdruckgebläse (7) druckseitig verbundenen verstellbaren Abluftdüsen (17.1) zur Reinigung von Bestandteilen der Hauptpresseinrichtung (5) und des Hauptantriebes (10.1).

2. Vorrichtung nach Anspruch 1, **dadurch gekennzeichnet, dass** in der Wandung der Vorrichtung (1) seitliche Öffnungen, für einen kontinuierlichen Luftstrom durch die Vorrichtung (1), ausgebildet sind.

3. Vorrichtung nach Anspruch 1, **dadurch gekennzeichnet, dass** seitlich des Saugdruckgebläses (7) Strömungskanäle (18) zu beiden Seiten der Vorrichtung (1) mittels beweglicher Leitbleche (19) ausgebildet sind, womit eine Reinigungsströmung zu einzelnen Bestandteilen innerhalb der Vorrichtung (1) führbar ist.

4. Vorrichtung nach Anspruch 1, **dadurch gekennzeichnet, dass** ein die Hauptpresseinrichtung (5) antreibendes Schwungrad (11) durch mindestens ein Abschottungselement (14.4) vom Inneren der Vorrichtung (1) isoliert ist.

5. Vorrichtung nach Anspruch 1, **dadurch gekennzeichnet, dass** die Abschottungselemente (14.1-14.4) formschlüssig miteinander verbunden sind, durch Einrastungen und/oder ausgeformten Haken und/oder Nieten und/oder Schrauben.

6. Vorrichtung nach Anspruch 1 und 3, **dadurch gekennzeichnet, dass** die Abschottungselemente (14.1 - 14.4) als in Form gezogene Bleche oder aus Kombination gezogener Bleche mit beweglichem Material, vorzugsweise Gummileisten oder -steckern ausgebildet sind.

7. Vorrichtung nach Anspruch 1, **gekennzeichnet durch** eine Segmentdichtung (16) für das Schneidwerk (3).

8. Vorrichtung nach Anspruch 1, **dadurch gekennzeichnet, dass** die Segmentdichtung (16) eine vordere Segmentdichtung (16.1) und/oder eine hintere Segmentdichtung (16.2) aufweist.

9. Vorrichtung nach einem der Ansprüche 7 oder 8, **dadurch gekennzeichnet, dass** die vordere Segmentdichtung (16.1) am Verbund (15) zwischen Verbindungselement (14.2) und Abschottungselement (14.3) des Schneidwerks (3) und die hintere Segmentdichtung (16.2) am Ende des Abschottungselements (14.3) des Schneidwerks (3) hinter dem Schneidwerk (3) angeordnet ist.

10. Vorrichtung nach einem der Ansprüche 7 bis 9, **dadurch gekennzeichnet, dass** das Abschottungselement (14.3) des Schneidwerks (3) in das Innere der Vorrichtung (1) verlängert ausgebildet ist, so dass der Verschleiß der Segmentdichtung (16.2) verringerbar ist.

11. Vorrichtung nach einem der Ansprüche 1 bis 10, **dadurch gekennzeichnet, dass** die Segmentdichtungen (16.1, 16.2) aus jeweils einem Streifen beweglichen Materials, vorzugsweise Gummi, gebildet sind, in welchen Lamellen eingeschnitten sind, so dass Führungszinken (3.1) des Schneidwerkes (3) ungehindert drehbar sind.

12. Vorrichtung nach einem der vorhergehenden Ansprüche, **dadurch gekennzeichnet, dass** das Saugdruckgebläse (7) eine Abdeckung (7.1) aufweist, wobei die Abdeckung (7.1) abnehmbar, schwenkbar und/oder klappbar ist.

13. Vorrichtung nach einem der vorhergehenden Ansprüche, **dadurch gekennzeichnet, dass** das Saugdruckgebläse (7) eine Ringleitung (17) zur Reinigung weiterer Bestandteile der Vorrichtung (1) aufweist, wobei in der Ringleitung (17) in geeigneten, insbesondere regelmäßigen Abständen bewegbar gelagerte Düsen (17.1) ausgebildet sind.

14. Vorrichtung nach Anspruch 13, **dadurch gekennzeichnet, dass** am Einlass der Ringleitung ein bewegliches Leitblech (17.2) angeordnet ist.

15. Vorrichtung nach einem der vorhergehenden Ansprüche, **dadurch gekennzeichnet, dass** der Aufnahmeeinrichtung (2) ein Häcksler (22) vorgeordnet ist, wobei der Häcksler (22) gegen das Innere der Vorrichtung (1) mit einem Abschottungselement (14.5) abgeschottet ist, welches mit dem Abschottungselement (14.1) der Aufnahmeeinrichtung (2) formschlüssig verbunden ist.

16. Vorrichtung nach einem der vorhergehenden Ansprüche, **dadurch gekennzeichnet, dass** das Abschottungselement (14.5) des Häckslers (22) und das Abschottungselement (14.1) der Aufnahmeeinrichtung (2) als Gliederblech aus einzeln einstellbaren Gliedern ausgebildet sind.

17. Vorrichtung nach einem der vorhergehenden Ansprüche, **dadurch gekennzeichnet, dass** zwischen Häcksler (22) und Aufnahmeeinrichtung (2) in der Wandung der Vorrichtung (1) eine seitliche Öffnung ausgebildet ist, um einen kontinuierlichen Luftstrom zu gewährleisten, der Verunreinigungen nach außen trägt.

18. Vorrichtung nach einem der vorhergehenden Ansprüche, **dadurch gekennzeichnet, dass** eine seitliche und/oder obere Öffnung in der Wandung der Vorrichtung (1) zwischen Schneidwerk (3) und Vorpresskammer (4) ausgebildet ist, um einen kontinuierlichen Luftstrom zu gewährleisten, der Verunreinigungen nach außen trägt.

19. Vorrichtung nach einem der vorhergehenden Ansprüche, **dadurch gekennzeichnet, dass** unterhalb des Hauptgetriebes (10.1) zwischen einem Raffer (8) zum Vorschieben des Erntegutes in die Hauptpresseinrichtung (5) und einer Vorpresskammer (9) Öffnungen ausgebildet sind, um Verstopfungen innerhalb des Raffers (8) zu vermeiden.

20. Vorrichtung nach einem der vorhergehenden Ansprüche, **dadurch gekennzeichnet, dass** die Vorrichtung (1) von einem Nutzfahrzeug gezogene Ballenpresse ist.

21. Vorrichtung nach einem der vorhergehenden Ansprüche, **dadurch gekennzeichnet, dass** der Antrieb der Reinigungseinrichtung ausgehend von dem Nutzfahrzeug über kraftübertragende, hydraulische und/oder elektrische Elemente erfolgt.

## Claims

1. A device for pressing bales, particularly large bales, of harvested crops, with a receiving device (2) for receiving harvested crops, with a cutter bar (3) for chopping the harvested crops, with a main pressing device (5) for pressing the harvested crops to form a bale and with a cleaning device, wherein a binding device (6) is assigned to the main pressing device (5), the yarn is wound and tied around a finish-pressed bale, with a suction pressure fan (7) which is formed outside the binding device (6) and whose vacuum side faces the binding device (6), **characterised by** the following elements:
- partition elements (14.1 - 14.3; 16) which isolate the receiving device (2) and the cutter bar (13) from the inside of the device (1); and
- adjustable exhaust air nozzles (17.1) connected on the pressure side to the suction pressure fan (7) by means of pipes (17) for cleaning components of the main pressing device (5) and of the main drive (10.1).

2. The device according to Claim 1, **characterised in that** lateral openings are formed in the wall of the device (1) to ensure a continuous air flow through the device (1).

3. The device according to Claim 1, **characterised in that** flow ducts (18) are formed laterally to the suction pressure fan (7) on both sides of the device (1) by means of moving guide plates (19) with which a cleaning flow can be guided to individual components inside the device (1).

4. The device according to Claim 1, **characterised in that** a flywheel (11) driving the main pressing device (5) is isolated from the inside of the device (1) by at least one partition element (14.4).

5. The device according to Claim 1, **characterised in that** the partition elements (14.1-14.4) are positively connected to each other by engagements and/or shaped hooks and/or rivets and/or screws.

6. The device according to Claim 1 and 3, **characterised in that** the partition elements (14.1 - 14.4) are designed as plates drawn to shape or as plates drawn from a combination with moving material, preferably rubber strips or plugs.

7. The device according to Claim 1, **characterised by** a segmented sealing (16) for the cutter bar (3).

8. The device according to Claim 1, **characterised in that** the segmented sealing (16) has a front segmented seal (16.1) and/or a rear segmented seal (16.2).

9. The device according to any one of Claims 7 or 8, **characterised in that** the front segmented seal (16.1) is arranged on the combination device (15) between the connecting element (14.2) and the partition element (14.3) of the cutter bar (3)( and the rear segmented seal (16.2) at the end of the partition element (14.3) of the cutter bar (3) behind the cutter bar (3).

10. The device according to any one of Claims 7 to 9, **characterised in that** the partition element (14.3) of the cutter bar (3) is designed so that it extends into the interior of the device (1) so that the wear of the segmented seal (16.2) can be reduced.

11. The device according to any one of Claims 1 to 10, **characterised in that** the segmented seals (16.1, 16.2) are each formed from a strip of moving material, preferably rubber, in which lamellae are cut in, so that guide prongs (3.1) of the cutter bar (3) are rotatable without limitation.

12. The device according to any one of the preceding claims, **characterised in that** the suction pressure fan (7) has a cover (7.1), wherein the cover (7.1) is removable and/or foldable.

13. The device according to any one of the preceding claims, **characterised in that** the suction pressure fan (7) has an annular pipe (17) for cleaning further components of the device (1), wherein movably mounted nozzles (17.1) are formed in the annular pipe (17) at suitable, in particular regular distances.

14. The device according to Claim 13, **characterised in that** a movable guide plate (17.2) is arranged on the outlet of the annular pipe.

15. The device according to any one of the preceding claims, **characterised in that** a chopper (22) is arranged in front of the receiving device (2), wherein the chopper (22) is isolated from the interior of the device (1) with a partition element (14.5) which is positively connected to the partition element (14.1) of the receiving device (2).

16. The device according to any one of the preceding claims, **characterised in that** the partition element (14.5) of the chopper (22) and the partition element (14.1) of the receiving device (2) are designed as articulated plates of individually adjustable links.

17. The device according to any one of the preceding claims, **characterised in that** a lateral opening is formed between the chopper (22) and receiving device (2) in the wall of the device (1) to guarantee a continuous air flow carrying contaminants to the outside.

18. The device according to any one of the preceding claims, **characterised in that** a lateral and/or upper opening is formed in the wall of the device (1) between the cutter bar (3) and the pre-pressing chamber (4) to guarantee a continuous air flow carrying contaminants to the outside.

19. The device according to any one of the preceding claims, **characterised in that** openings are formed underneath the main gear (10.1) between a rake (8) for pushing the harvested crops forward into the main pressing device (5) and a pre-pressing chamber (9) to avoid blockages inside the rake (8).

20. The device according to any one of the preceding claims, **characterised in that** the device (1) is a bale press pulled from a commercial vehicle.

21. The device according to any one of the preceding claims, **characterised in that** the cleaning device is driven from the commercial vehicle by means of force transmitting hydraulic and/or electrical elements.

## Revendications

1. Dispositif pour compresser des balles, notamment des balles de grandes dimensions, réalisées à partir d'un produit récolté, avec un dispositif de réception (2) pour recevoir le produit récolté, avec un outil de coupe (3) servant à couper le produit récolté en petits morceaux, avec un dispositif de compression principal (5) servant à compresser le produit récolté en balles et avec un dispositif de nettoyage, un dispositif de ligaturage (6) étant associé au dispositif de compression principal (5), ledit dispositif de ligaturage enroulant et nouant un fil autour de balles déjà compressées, avec une soufflerie aspirante (7) réalisée sur le dispositif de ligaturage (6) et dont le côté de sous-pression est orienté vers le dispositif de ligaturage (6), **caractérisé par** la présence des éléments suivants :
- des éléments de cloisonnement (14.1 - 14.3 ; 16) isolant le dispositif de réception (2) et l'outil de coupe (3) par rapport à l'intérieur du dispositif (1) ; et
- des buses d'évacuation d'air (17.1) mobiles reliées du côté de pression à la soufflerie aspirante (7) par le biais de conduites (17) pour le nettoyage des composants du dispositif de compression principal (5) et de l'entraînement principal (10.1).

2. Dispositif selon la revendication 1, **caractérisé en ce que** des ouvertures latérales sont réalisées dans la paroi du dispositif (1) pour permettre le passage d'un flux d'air continu à travers le dispositif (1).

3. Dispositif selon la revendication 1, **caractérisé en ce que** des canaux d'écoulement de flux (18) placés à côté de la soufflerie aspirante (7) sont réalisés des deux côtés du dispositif (1) par le biais de tôles déflectrices mobiles (19), permettant ainsi de guider un flux de nettoyage vers différents composants individuels placés à l'intérieur du dispositif (1).

4. Dispositif selon la revendication 1, **caractérisé en ce qu'**un volant (11) entraînant le dispositif de compression principal (5) est isolé de l'intérieur du dispositif (1) par au moins un élément de cloisonnement (14.4).

5. Dispositif selon la revendication 1, **caractérisé en ce que** les éléments de cloisonnement (14.1 - 14.4) sont reliés entre eux par complémentarité de formes, par le biais d'éléments cliquetés et/ou de crochets saillants et/ou de rivets et/ou de vis.

6. Dispositif selon les revendications 1 et 3, **caractérisé en ce que** les éléments de cloisonnement (14.1 - 14.4) prennent la forme de tôles étirées ou d'une combinaison de tôles étirées et d'un matériau mobile, de préférence des baguettes ou des fiches en caoutchouc.

7. Dispositif selon la revendication 1, **caractérisé par** la présence d'un joint segmenté (16) permettant le passage de l'outil de coupe (3).

8. Dispositif selon la revendication 1, **caractérisé en ce que** le joint segmenté (16) comporte un joint segmenté avant (16.1) et/ou un joint segmenté arrière (16.2).

9. Dispositif selon l'une quelconque des revendications 7 ou 8, **caractérisé en ce que** le joint segmenté avant (16.1) est disposé au niveau du raccordement (15) prévu entre l'élément de liaison (14.2) et l'élément de cloisonnement (14.3) de l'outil de coupe (3) et que le joint segmenté arrière (16.2) est disposé au niveau de l'extrémité de l'élément de cloisonnement (14.3) de l'outil de coupe (3), derrière l'outil de coupe (3).

10. Dispositif selon l'une quelconque des revendications 7 à 9, **caractérisé en ce que** l'élément de cloisonnement (14.3) de l'outil de coupe (3) est rallongé à l'intérieur du dispositif (1), de façon à réduire l'usure du joint segmenté (16.2).

11. Dispositif selon l'une quelconque des revendications 1 à 10, **caractérisé en ce que** les joints segmentés (16.1, 16.2) sont respectivement réalisés à partir d'une bande de matériau mobile, de préférence du caoutchouc, dans laquelle des lamelles sont découpées, de façon à permettre aux dents de guidage (3.1) de l'outil de coupe (3) de tourner sans entrave.

12. Dispositif selon l'une quelconque des revendications précédentes, **caractérisé en ce que** la soufflerie aspirante (7) comporte un cache (7.1) ledit cache (7.1) pouvant être retiré, pivoté et/ou rabattu.

13. Dispositif selon l'une quelconque des revendications précédentes, **caractérisé en ce que** la soufflerie aspirante (7) comporte une conduite annulaire (17) servant au nettoyage des autres composants du dispositif (1) et des buses (17.1) disposées de façon à pouvoir être se déplacer étant réalisées dans la conduite annulaire (17) à des distances adaptées, notamment régulières.

14. Dispositif selon la revendication 13, **caractérisé en ce qu'**une tôle déflectrice mobile (17.2) est disposée au niveau de l'orifice d'admission de la conduite annulaire.

15. Dispositif selon l'une quelconque des revendications précédentes, **caractérisé en ce qu'**un hache-paille (22) est placé en amont du dispositif de réception (2), ledit hache-paille (22) étant cloisonné par rapport à l'intérieur du dispositif (1) par le biais d'un élément de cloisonnement (14.5) relié par complémentarité de formes à l'élément de cloisonnement (14.1) du dispositif de réception (2).

16. Dispositif selon l'une quelconque des revendications précédentes, **caractérisé en ce que** l'élément de cloisonnement (14.5) du hache-paille (22) et l'élément de cloisonnement (14.1) du dispositif de réception (2) sont réalisés sous la forme de maillons de tôle composés de maillons réglables individuellement.

17. Dispositif selon l'une quelconque des revendications précédentes, **caractérisé en ce qu'**une ouverture latérale est réalisée dans la paroi du dispositif (1) entre le hache-paille (22) et le dispositif de réception (2), pour garantir la présence d'un flux d'air continu transportant les saletés vers l'extérieur.

18. Dispositif selon l'une quelconque des revendications précédentes, **caractérisé en ce qu'**une ouverture latérale et/ou supérieure est réalisée dans la paroi du dispositif (1) entre l'outil de coupe (3) et la chambre de précompression (4) pour garantir la présence d'un flux d'air continu transportant les saletés vers l'extérieur.

19. Dispositif selon l'une quelconque des revendications précédentes, **caractérisé en ce que** des ouvertures sont réalisées en dessous de l'entraînement principal (10.1) entre un élément d'enlèvement (8) servant à pousser vers l'avant le produit récolté dans le dispositif de compression principal (5) et une chambre de précompression (9), en vue d'éviter les bourrages à l'intérieur de l'élément d'enlèvement (8).

20. Dispositif selon l'une quelconque des revendications précédentes, **caractérisé en ce que** le dispositif (1) est une presse à balles tractée par un véhicule utilitaire.

21. Dispositif selon l'une quelconque des revendications précédentes, **caractérisé en ce que** l'entraînement du dispositif de nettoyage se produit en partant du véhicule utilitaire par le biais d'éléments transmetteurs de force, d'éléments hydrauliques et/ou électriques.
